# EUROPÄISCHE PATENTANMELDUNG

(11) **EP 0 911 079 A2**
(43) Veröffentlichungstag der Anmeldung: **28.04.1999**
(21) Anmeldenummer: 98119108.3
(22) Anmeldetag: 09.10.1998
(51) Int. Cl.: B01J 37/02, B01J 31/20, B01J 31/22, B01J 23/38

(54) **Trägerkatalysatoren mit hoher Sinterstabilität und Verfahren zu deren Herstellung**

(30) Priorität: 17.10.1997 DE 19745905
(71) Anmelder: Hoechst Research & Technology Deutschland GmbH & Co. KG, 65929 Frankfurt am Main (DE)
(72) Erfinder: Hagemeyer, Alfred, Dr., 48431 Rheine (DE); Werner, Harald, Dr., 61350 Bad Homburg (DE); Dingerdissen, Uwe, Dr., 64342 Seeheim-Jugenheim (DE); Kühlein, Klaus, Prof. Dr., 65779 Kelkheim (DE); Thomas, John Meurig, Prof., Cambridge, CB2 1 QY (GB); Johnson, Brian Frederick Gilbert,Prof., Cambridge CB3 0RS (GB); Shephard, Douglas Stuart, Dr., Cambridge CB2 1RD (GB); Maschmeyer, Thomas, Dr., Cambridge CB1 4AR (GB)

(57) **Zusammenfassung**

Trägerkatalysatoren mit hoher Sinterstabilität enthaltend eine oder mehrere Edelmetall-Cluster-Carbonyl-Verbindungen der Formel (1)

[HₐM_{b}N_{c}L_{d}(CO)ₓ]ⁿ⁻ Aⁿ⁺

sowie deren Verwendung zur Dehydrierung, Hydrierung und Oxidation organischer Verbindungen
worin
- M und N: unabhängig voneinander für eines oder mehrere Metalle ausgewählt der folgenden Gruppe stehen: Pt, Rh, Ir, Os, Ru, Ag, Pd, Au, Ni, Fe, Co, Cu, Re, Mn;
- L: steht für einen oder mehrere, gegebenenfalls voneinander verschiedene neutrale oder anionische Liganden;
- (A)ⁿ⁺: steht für eines oder mehrere Kationen, die die Ladung des Komplexes ausgleichen;
- a: ist eine ganze Zahl von 0 bis 10,
- b: ist eine ganze Zahl von 2 bis 60;
- c: ist eine ganze Zahl von 0 bis 30;
- d: ist eine ganze Zahl von 0 bis 60;
- x: ist eine ganze Zahl von 1 bis 120;
- n: steht für die Gesamtladung des Komplexes, die sich aus den einzelnen Ladungen der Bestandteile ergibt, die größer als 0 ist,
wobei die Verbindungen der Formel (1) in den Poren eines mesoporösen Trägermaterials angeordnet sind.

## Beschreibung

Die vorliegende Erfindung betrifft Trägerkatalysatoren auf der Basis von Edelmetallcarbonylverbindungen, ein Verfahren zur Herstellung dieser Katalysatoren sowie deren Verwendung zur Hydrierung, Dehydrierung oder Oxidation organischer Verbindungen oder Peroxid-Zersetzung.

Es besteht erhebliches Interesse an der Bildung, Struktur und katalytischen Anwendung von mono- und bimetallischen Nanoteilchen und Clustern, seit in "Bimetallic Catalysts", Wiley, New York, 1983 und Int. Rev. Phys. Chem. 7, 1988, 281 die hervorragenden katalytischen Eigenschaften von Aluminiumoxidgeträgerten Ru-Cu, Pt-Ir und Pt-Re Systemen bei Reformierverfahren gezeigt wurden.

Neben den konventionellen keramischen Katalysatorträgern mit breiter Porenradienverteilung, wie beispielsweise SiO₂, Al₂O₃, TiO₂ und ZrO₂, werden dank der leichten Zugänglichkeit durch Hydrothermalsynthesen verstärkt auch rein mesoporöse Materialien mit Porendurchmessern im Bereich von 2,5 bis 10 nm als Träger eingesetzt, wie beispielsweise in Current Opinion in Solid State and Material Science, 1, 1996, 76 und Current Opinion in Colloid Science, 1, 1996, 523 offenbart.

Es sind auch Verfahren bekannt, katalytisch aktive Zentren innerhalb solcher Mesoporen anzuordnen. In Nature, 378, 1995, 159, Angew. Chem. Int. Ed. Eng. 35, 1996, 2787 und Faraday Discuss. 105, 1996, 1 werden solche Verfahren offenbart, beispielsweise die Anordnung von Ti(IV) Ionen verankert über Si-O-Bindungen.

Es sind zahlreiche Methoden offenbart, Edelmetalle und Edelmetallcluster auf inerte keramische Träger, ebenfalls auf die genannten mesoporösen Träger, aufzubringen, um Trägerkatalysatoren für Hydrierungen und Oxidationen herzustellen. Übersichten finden sich beispielsweise in Clusters and Colloids, VCH, Weinheim, 1994; Heterogeneous Catalysis, Clarendon Press, Oxford, 1987; Catalytic Chemistry, Wiley, New York, 1992, und Metal Clusters in Catalysis, Elsevier, Amsterdam, 1986. Die nach den Verfahren des Standes der Technik erhaltenen Katalysatoren sind zwar in der Anfangsphase ihrer Benutzung aktiv, jedoch deaktivieren sie rasch, da die Fixierung der Edelmetall-Nanoteilchen und Edelmetallcluster auf dem Träger unzureichend ist, und die Primärteilchen durch Sintervorgänge zu größeren Teilchen mit nur noch geringer katalytischer Oberfläche agglomerieren.

Aufgabe der vorliegenden Erfindung war es daher, einen Katalysator bereitzustellen, der auch nach längeren Standzeiten noch eine hohe Aktivität besitzt und der sich durch eine gute Sinterstabilität auszeichnet, d.h. bei dem die Edelmetallcluster oder -Nanoteilchen auch nach dem Sintervorgang nicht zu größeren Teilchen agglomerieren. Weitere Aufgabe der Der Erfindung ist es ein Verfahren zur Aufbringung und Fixierung von Edelmetallclustern auf Hydroxylgruppen tragenden Trägern bereitzustellen, wodurch Trägerkatalysatoren mit feindisperser Metallbeaufschlagung, hoher Aktivität und ausgezeichneter Sinterstabilität entstehen.

Die vorliegende Erfindung löst diese Aufgabe durch die Bereitstellung neuer Trägerkatalysatoren mit hoher katalytischer Aktivität und Selektivität sowie ausgezeichneter Sinterstabilität, die die Nachteile, der bekannten Katalysatoren nicht besitzen, ein Verfahren zur Herstellung dieser Katalysatoren und deren Verwendung in organischen Reaktionen.

Die vorliegende Erfindung betrifft somit Trägerkatalysatoren mit hoher Sinterstabilität enthaltend eine oder mehrere Edelmetall-Cluster-Carbonyl-Verbindungen der Formel (1)

[HₐM_{b}N_{c}L_{d}(CO)ₓ]ⁿ⁻ Aⁿ⁺

worin
- M und N: unabhängig voneinander für eines oder mehrere Metalle ausgewählt der folgenden Gruppe stehen: Pt, Rh, Ir, Os, Ru, Ag, Pd, Au, Ni, Fe, Co, Cu, Re, Mn;
- L: steht für einen oder mehrere, gegebenenfalls voneinander verschiedene neutrale oder anionische Liganden;
- (A)ⁿ⁺: steht für eines oder mehrere Kationen, die die Ladung des Komplexes ausgleichen;
- a: ist eine ganze Zahl von 0 bis 10, vorzugsweise 0 bis 6;
- b: ist eine ganze Zahl von 2 bis 60;
- c: ist eine ganze Zahl von 0 bis 30;
- d: ist eine ganze Zahl von 0 bis 60;
- x: ist eine ganze Zahl von 1 bis 120;
- n: steht für die Gesamtladung des Komplexes, die sich aus den einzelnen Ladungen der Bestandteile ergibt, die größer als 0 ist,
wobei die Verbindungen der Formel (1) in den Poren eines mesoporösen Trägermaterials angeordnet sind.

Als mesoporöse Hydroxylgruppen enthaltende Trägermaterialien kommen insbesondere Siliciumdioxid, Silicium-Mischoxide, Aluminiumoxide, Zirkonoxide oder Titanoxide in Frage.

So liegt der Porendurchmesser bei Verwendung von mesoporösen Siliciumdioxid (z.B. MCM41®, Firma Mobil) erfindungsgemäß beispielsweise im Bereich von 2 bis 50 nm, insbesondere im Bereich von 2,5 bis 30 nm.

Die Edelmetallcluster werden an den Oberflächen-Hydroxylgruppen des Trägermaterials fest gebunden, so daß verhindert wird, daß die Cluster durch Sintervorgänge agglomerieren und der Katalysator deaktiviert wird. Erfindungsgemäß kommt es bei hohen Metallbeladungen zum Aufbau regulärer Anordnungen der Edelmetallcluster in den Poren des Trägermaterials, wodurch die Aktivmetallbeladung deutlich erhöht werden kann, ohne den Verlust der guten Metalldispersionen durch Agglomerationsvorgänge befürchten zu müßen.

So liegt im Falle von Ruthenium z.B. der Wiederholungsabstand der regulär angeordneten Edelmetall-Cluster-Carbonyl-Verbindungen entlang der Mesoporenachse des Trägermaterials, bei Verwendung von MCM-41, im Bereich von 1,0 bis 5,0 nm, insbesondere im Bereich von 1,7 bis 2,7. Bei Verwendung von anderen Trägermaterialien kann der Wiederholungsabstand der Cluster im Bereich von 0,5 bis 5 nm liegen.

Die Imprägnierung des Trägers mit der Imprägnierlösung kann auf die nach dem Stand der Technik üblichen Arten erfolgen, beispielsweise durch Tränken, Tauchen, Aufspritzen, Aufsprühen oder Ultraschalldispersion. Die mono- oder bimetallischen Edelmetallcarbonyl-Komplexe werden aus Lösung auf dem Trägermaterial adsorbiert. Als Lösungsmittel kommen solche in Betracht, die mit den Edelmetallcarbonylkomplexen nicht reagieren. Solche inerten Lösungsmittel sind beispielsweise aliphatische Ether, insbesondere Diethylether.

In einer bevorzugten Ausführungsform wird die Beladung des Trägers mit den anionischen Clustern dadurch erreicht, , daß die beiden Komponenten in Ether und einer geringen Menge eines zweiten Lösemittels, z.B. Methylenchlorid, in welchem das Cluster-Salz löslich ist, aufgeschlämmt werden.

Das Edelmetall M steht vorzugsweise für Ru, Ag, Pd, Pt, Au, Rh, Re, Ir, Co, Cu oder Ni. Der stöchiometrische Index b liegt im Bereich von 2 bis 60, insbesondere im Bereich von 3 bis 30.

Das Edelmetall N ist vorzugsweise Ag oder Cu. Der stöchiometrische Index c liegt vorzugsweise im Bereich von0 bis 30, insbesondere im Bereich von 0 bis 15.

Die Edelmetallcarbonylkomplexe können neben den Edelmetallen und den CO-Gruppen gegebenenfalls noch Wasserstoff oder weitere Liganden enthalten, es ist aber auch möglich, daß es reine Carbonylkomplexe ohne weitere Liganden sind. Die Edelmetallcarbonylkomplexe können eine, 2, 3 oder 4 verschiedene chemische Spezies als anionische, insbesondere stark reduzierend wirkende Liganden L enthalten. Diese chemischen Spezies können beispielsweise C, N, S, C₂, F, Cl, Br, I, BF₄, Cyanid, Isocyanid, Cyanat, Isocyanat, CNO, Phosphine, Phosphinoxide, Arsine, Amine, gesättigte oder ungesättigte Alkyl-, Allyl- oder Arylreste, z.B. Cyclopentadienyl, sein, die neutral oder als Anionen vorkommen können.

Enthalten die Edelmetallcarbonylkomplexe eine chemische Spezies als Liganden, so gibt der stöchiometrische Koeffizient d seine Teilchenzahl an. Enthalten die Edelmetallcarbonylkomplexe mehr als eine chemische Spezies als Liganden, so bedeutet d für jede von ihnen die Teilchenzahl, die auch für die einzelnen Ligandentypen unterschiedlich sein kann. d bedeutet für jede chemische Spezies eine Zahl von 0 bis 60, insbesondere von 0 bis 30.

Die Zahl x der im Komplex enthaltenen CO-Gruppen liegt im Bereich von 1 bis 120, bevorzugt im Bereich von 1 bis 60, insbesondere im Bereich von 5 bis 50. Die Gesamtladung n der Komplexe hängt von der Summe der Ladungen ab, die die Metalle und die Liganden tragen, sie liegt bevorzugt im Bereich von -1 bis - 10, insbesondere im Bereich von -1 bis -6.

Erfindungsgemäß bevorzugte Verbindungen der Formel 1 sind z.B.: (Rh₁₃(CO)₂₄H₃)²⁻, (Rh₁₂(CO)₃₀)²⁻, (Rh₆(CO)₁₅H)⁻,(Rh₁₄(CO)₂₅)⁴⁻⁻,(Rh₁₅(CO)₂₇)³⁻, (Rh₆(CO)₁₅C)²⁻,(Ni₅(CO)₁₂)²⁻,(Ni₆(CO)₁₂)²⁻,(Fe₅(CO)₁₄N)⁻,(Co₆(CO)₁₅)²⁻, (HCo₆(CO)₁₅)⁻, (FeRu₃(CO)₁₃)²⁻, (FeRu₂Os(CO)₁₃)²⁻, (CoOs₃(CO)₁₃)⁻, (FeCo₃(CO)₁₂)⁻, (HOs₅(CO)₁₅)⁻, (Os₅(CO)₁₅)²⁻, (Os₆(CO)₁₈]²⁻, (Os₇(CO)₂₀)²⁻, (Rh₁₇(CO)₃₂₍S)₂)³⁻, (Pt₆(CO)₁₂)²⁻, (Pt₉(CO)₁₈)²⁻, (Pt₁₂(CO)₂₄)²⁻, (Pt₁₅(CO)₃₀)²⁻, (Pt₁₈(CO)₃₆)²⁻, (Ir₄(CO)₁₁)²⁻, (Re₆(CO)₁₂H₆)²⁻, (Mn₃(CO)₁₂H₂)⁻, (Fe₃(CO)₁₁H)⁻, (Re₄(CO)₁₆)²⁻, (Os₂Re(CO)₁₂)⁻, (Os₈(CO)₂₂)²⁻, (Rh₆(CO)₁₅C)²⁻, (Rh₁₂(CO)₃₄)²⁻, (Ru₆C(CO)₁₆)²⁻, (H₂Ru₁₀C(CO)₂₂)²⁻,(H₂Ru₁₀(CO)₂₅)²⁻,
(Ag₃Ru₁₀C₂(CO)₂₈Cl)²⁻, (Ru₅C(CO)₁₄)²⁻.

Die Ausbildung der erfindungsgemäßen geordneten Strukturen auf der Oberfläche des Trägermaterials basiert einerseits auf der chemischen Fixierung der Cluster und andererseits darauf, daß die Cluster durch Umgebung mit sterisch anspruchsvollen Gegenionen "auf Abstand'' gehalten werden. So wird jeder Cluster auf der Trägermaterialoberfläche von zwei Gegenionen flankiert, so daß sich zwischen zwei Clustern zwei Gegenionen befinden.

Als Gegenionen [A]ⁿ⁺, die die Ladung des Edelmetallcarbonylkomplexes kompensieren, kommen ein oder mehrere verschiedene Ionen in Frage, die vorzugsweise einen Ionenradius von mindestens 0,5 nm, insbesondere von ≥ 1nm besitzen.

Bevorzugt ist die Verwendung von Ionen der Formel [R₄E]⁺ , worin R Wasserstoff, einen Alkylrest mit 1 bis 12 Kohlenstoffatomen, einen Arylrest mit 6 bis 12 Kohlenstoffatomen oder eine Amin- oder Imingruppe bedeutet, und E für N, P oder As steht. Weiterhin bevorzugt ist die Verwendung von Ionen der Formel (R₂N)⁺, worin N für Stickstoff steht und R für eine organische Gruppe steht, bevorzugt eine Phosphingruppe, wie z.B. Triphenylphosphin. Besonders bevorzugt ist die Verwendung von Tetraphenylarsonium- und Bis(triphenylphosphino)imminium-Kationen. Als Alkylreste werden speziell Methyl, Ethyl, Propyl, Butyl oder Cyclohexyl verwendet; als Arylreste insbesondere Phenylringe, die gegebenenfalls substituiert sein können.

Mit Hilfe des erfindungsgemäßen Verfahrens ist es möglich auf der Trägermaterialoberfläche hohe Beladungen mit den Cluster-Salzen zu erzielen. So ist die Beladung, bei der Verwendung von MCM-41 als Trägermaterial, (definiert als mSalz/m MCM-41) erfindungsgemäß > 0,5, insbesondere im Bereich von 0,7 bis 3. Die Beladung errechnet sich aus den Einwaagen (m) von Salz und Trägermaterial bei der Trägerung der Cluster. Die Aktivmetallbeladung des fertigen Katalysators kann auch durch Atomspektroskopie experimentell ermitelt werden.

Die Aktivierung des Katalysators erfolgt, indem die Verbindungen der Formel (1) durch eine thermische, photolytische oder chemische Nachbehandlung in die entsprechenden mono- oder bimetallischen Edelmetalle M oder MN in ihre freie Form überführt werden und der Ligand L abgespalten wird. Hierzu wird der mit den Edelmetallclustern beladene Träger einem reduzierten Druck, bevorzugt unterhalb 200 torr, insbesondere unterhalb von 20 torr, speziell unterhalb 200 mtorr ausgesetzt. Bei Bedarf kann der Träger erwärmt werden, etwa auf Temperaturen zwischen 10 und 300, vorzugsweise 15 bis 200°C. Das Erwärmen dauert im allgemeinen 10 Minuten bis 5 Stunden, bevorzugt 20 bis 180 Minuten und erfolgt bevorzugt unter Inertgas.

Die nach dem erfindungsgemäßen Verfahren hergestellten Katalysatoren können vor oder nach der Aktivierung durch mechanische Bearbeitung wie Pressen oder Zerkleinern in eine Form gebracht werden, die für ihre Verwendung als technische Trägerkatalysatoren vorteilhaft ist.

Eine besonders bevorzugte Ausführungsform der Erfindung ist ein Verfahren zur Herstellung eines Ruthenium-Katalysators, zu dessen Herstellung ein Siliziumdioxid-Träger mit einem Porendurchmesser von etwa 3 nm (®MCM 41, Mobil) mit Verbindungen, die die Ruthenium-Cluster-Ionen [Ru₆C(CO)₁₆]²⁻ oder [H₂Ru₁₀(CO)₂₅]²⁻ enthalten, imprägniert wird. Bevorzugt werden die Rutheniumkomplexe in Form einer Lösung ihres Bis-(Triphenylphosphino)imminium-Salzes (PPN) verwendet, d.h. das Gegenion ist PPN⁺.

Die erfindungsgemäßen Trägerkatalysatoren zeichnen sich durch ihre hohe katalytische Aktivität und Selektivität, verbunden mit hohen Standzeiten aus und eignen sich insbesondere zur Hydrierung, Dehydrierung und Oxidation organischer Verbindungen oder Peroxid-Zersetzung.

### Beispiele

### Beispiel 1 und 2:

### Synthese der Cluster-Precursoren:

Die Precursoren [Ru₆C(CO)₁₆] [PPN]₂ (PPN = Bis-Triphenylphosphin-Imminium) und [H₂Ru₁₀(CO)₂₅][PPN]₂ wurden nach Literaturvorschriften synthetisiert (Johnson B.F.G., Lewis J., Sankey S., Wong W.K., McPartlin M., Nelson W.J.H., J. Organomet. Chem. 191, C3 (1980); Bailey P.J., Beswick M.A., Johnson B.F.G., Lewis J., McPartlin M., Raithby P.R., DeArellano M.C.R., J. Chem. Soc. Dalton Trans. (1996) 3515).

### Adsorption auf mesoporösem MCM-41-Träger:

200 mg MCM-41 wurden unter Hochvakuum (0.01 mm Hg) bei 473 K für 6h getrocknet. Anschließend wird der getrocknete Träger in 30 ml trockenem Ether mit den Ru-Cluster-Salzen [Ru₆C(CO)₁₆] [PPN]₂ oder [H₂Ru₁₀(CO)₂₅][PPN]₂ in Gegenwart von 0.1 ml CH₂Cl₂ bei Raumtemperatur in Abwesenheit von Licht für 72h aufgeschlämmt. Der erhaltene rote oder braune Feststoff wird mit 10ml Ether gewaschen und unter Hochvakuum (0.01 mm Hg) getrocknet. Maximale Belegungen für die zwei Cluster-Salze waren (m_{Salz}/m_{MCM-41}) = 8:7 und 15:9 für MCM-41/Ru₆ und MCM-41/Ru₁₀.

Die Produkte werden mittels IR und TEM charakterisiert.
IR-Daten für MCM-41/Ru₆: n(CO) 2056(w) , 1968 (vs), 1929 (m.sh.), 1910 (m), 1816 (w.sh.), 1795 (w), 1727 (s) cm⁻¹
IR-Daten für MCM-41/Ru₁₀: n(CO) 2053 (m), 2044 (w.sh.), 2007 (vs), 1989 (s.sh.), 1955 (s.sh.), 1931 (s), 1780 (w), 1751 (w), 1709 (w) cm⁻¹
Die Auswertung der STEM-Aufnahmen ergibt regelmäßige Anordnungen von Ru-Clustern mit (projizierten) Abständen von 1.7 nm bzw. 2.66 nm entlang der Porenachse.

### Fixierung

Durch milde Wärmebehandlung im Vakuum werden die Ligandenhüllen der Cluster entfernt und "entblößte" Nanopartikel aus Ru-Metall erhalten.

Damit wurde gezeigt, daß durch sorgfältige Auswahl des Cluster-Precursors und des Trägers wohldefinierte, isolierte und katalytisch aktive Nanopartikel in regulären Anordnungen hergestellt werden können.

## Patentansprüche

1. Trägerkatalysatoren mit hoher Sinterstabilität enthaltend eine oder mehrere Edelmetall-Cluster-Carbonyl-Verbindungen der Formel (1)
[HₐM_{b}N_{c}L_{d}(CO)ₓ]ⁿ⁻ Aⁿ⁺
worin
M und N unabhängig voneinander für eines oder mehrere Metalle ausgewählt der folgenden Gruppe stehen: Pt, Rh, Ir, Os, Ru, Ag, Pd, Au, Ni, Fe, Co, Cu, Re, Mn;
L steht für einen oder mehrere, gegebenenfalls voneinander verschiedene neutrale oder anionische Liganden;
(A)ⁿ⁺ steht für eines oder mehrere Kationen, die die Ladung des Komplexes ausgleichen;
a ist eine ganze Zahl von 0 bis 10,
b ist eine ganze Zahl von 2 bis 60;
c ist eine ganze Zahl von 0 bis 30;
d ist eine ganze Zahl von 0 bis 60;
x ist eine ganze Zahl von 1 bis 120;
n steht für die Gesamtladung des Komplexes, die sich aus den einzelnen Ladungen der Bestandteile ergibt, die größer als 0 ist,
wobei die Verbindungen der Formel (1) in den Poren eines mesoporösen Trägermaterials angeordnet sind.

2. Trägerkatalysatoren nach Anspruch 1, dadurch gekennzeichnet, daß das Trägermaterial Hydroxylgruppen enthält, insbesondere daß es sich bei dem Trägermaterial um Siliciumdioxid, Silicium-Mischoxide, Aluminiumoxide, Zirkoniumoxide oder Titandioxide handelt.

3. Trägerkatalysator nach Anspruch 1 und/oder 2, dadurch gekennzeichnet, daß der Porendurchmesser des mesoporösen Trägermaterials im Bereich von 2 und 50 nm, insbesondere im Bereich von 2,5 und 30 nm liegt.

4. Trägerkatalysator nach einem oder mehreren der Ansprüche 1 bis 3, dadurch gekennzeichnet, daß M für Ru,Fe, Os, Ag, Cu oder Au steht.

5. Trägerkatalysator nach einem oder mehreren der Ansprüche 1 bis 4, dadurch gekennzeichnet, daß L für einen oder mehrere Liganden ausgewählt aus der folgenden Gruppe der chemischen Spezies steht C, N, S, C₂, F, Cl, Br, I, BF₄, Cynid, Isocyanid, Cyanat, Isocyanat, CNO, Phosphine, Phosphinoxide, Arsine, Amine, Alkyl (gesättigt und ungesättigt) oder Aryl (z.B. , Cyclopentadienyle) sind.

6. Trägerkatalysator nach einem oder mehreren der Ansprüche 1 bis 5, dadurch gekennzeichnet, daß das Gegenion(A)ⁿ⁺ einen Ionenradius von mindestens 0,5 nm, vorzugsweise ca. 1 nm besitzt.

7. Trägerkatalysator nach einem oder mehreren der Ansprüche 1 bis 6, dadurch gekennzeichnet, daß die Gesamtladung n der Edelmetallcarbonylkomplexe im Bereich von -1 bis -10, insbesondere im Bereich von -1 bis -6 liegt.

8. Trägerkatalysator nach einem oder mehreren Ansprüche 1 bis 7, dadurch gekennzeichnet, daß die Zahl x der im Edelmetallcarbonylkomplex enthaltenen Carbonylgruppen im Bereich von 1 bis 60 liegt.

9. Trägerkatalysator nach einem oder mehreren der Ansprüche 1 bis 8, dadurch gekennzeichnet, daß der Wiederholungsabstand der regulär angeordneten Edelmetall-Cluster-Carbonyl-Verbindungen entlang der Mesoporenachse des Trägermaterials, bei Verwendung von MCM-41, im Bereich von 1,0 bis 5,0 nm liegt.

10. Trägerkatalysator nach einem oder mehreren der Ansprüche 1 bis 9, dadurch gekennzeichnet, daß der Katalysator aktiviert wird, indem die Verbindungen der Formel (1) durch eine thermische, photolytische oder chemische Nachbehandlung in die entsprechenden mono- oder bimetallischen Edelmetalle M oder MN in ihre freie Form überführt werden.

11. Trägerkatalysator nach einem oder mehreren der Ansprüche 1 bis 10, dadurch gekennzeichnet, daß die Beladung (mSalz/m MCM-41) des Trägermaterials, bei Verwendung von MCM-41, mit den Edelmetall-Cluster-Salzen > 0,5 ist.

12. Verfahren zur Herstellung eines Trägerkatalysators gemäß mindestens einem der Ansprüche 1 bis 11 durch Imprägnieren eines hydroxylgruppenhaltigen Trägermaterials mit Verbindungen der Formel (1).

13. Verfahren nach Anspruch 12, dadurch gekennzeichnet, daß der Katalysator bei Drucken von unter 200 torr oder unter Inertgas und bei Temperaturen von 10 bis 300, insbesondere bei 15 bis 200°C aktiviert wird.

14. Verfahren nach Anspruch 12 oder 13, dadurch gekennzeichnet, daß der Katalysator mit einer Lösung von [Ru₆C(CO)₁₆]²⁻- oder [H₂Ru₁₀(CO)₂₅]²⁻Ionen imprägniert wird.

15. Verwendung eines Trägerkatalysators gemäß mindestens einem der Ansprüche 1 bis 11 zur Hydrierung, Dehydrierung, Oxidation organischer Verbindungen oder Peroxid-Zersetzung.
